# EUROPEAN PATENT APPLICATION

(11) **EP 4 723 324 A1**
(43) Date of publication of application: **08.04.2026**
(21) Application number: 24814145.9
(22) Date of filing: 11.05.2024
(51) Int. Cl.: H01M 50/169, H01M 50/271, H01M 50/244

(54) **BATTERY HOUSING, BATTERY AND ELECTRIC DEVICE**

(30) Priority: 31.05.2023 CN 202310639169
(71) Applicant: BYD Company Limited, Shenzhen, Guangdong 518118 (CN)
(72) Inventor: LIANG, Liwei, Shenzhen, Guangdong 518118 (CN); MA, Chenchong, Shenzhen, Guangdong 518118 (CN); YANG, Yuchuan, Shenzhen, Guangdong 518118 (CN); HU, Shumin, Shenzhen, Guangdong 518118 (CN); OUYANG, Jinzhong, Shenzhen, Guangdong 518118 (CN)
(74) Representative: Mathys & Squire
(86) International application number: PCT/CN2024/092526
(87) International publication number: WO 2024/244944

(57) **Abstract**

A battery housing, a battery, and an electric device are provided. The battery housing includes a housing body and a cover plate. The housing body and the cover plate are fixedly connected by using a weld portion. The welding portion includes a first weld portion. The first weld portion is simultaneously connected to at least the cover plate and an outer surface of a sidewall of the housing body.

## Description

This application claims priority to Patent Application No. 202310639169.0, filed with the China National Intellectual Property Administration on May 31, 2023, which is incorporated herein by reference in its entirety.

### TECHNICAL FIELD

The present disclosure relates to the field of battery technologies, and specifically, to a battery housing, a battery, and an electric device.

### BACKGROUND

As the application of batteries gradually increases across various fields, battery safety has become one of the primary concerns for major battery manufacturers and consumers. Generally, a battery includes a battery housing and an electrode core accommodated in the battery housing. The battery housing generally includes a housing body and a cover plate. To ensure the safety of the battery during subsequent use, it is necessary to ensure connection robustness between the cover plate and the housing body.

Therefore, how to improve connection robustness between the cover plate and the housing body is a problem to be resolved urgently in the battery field.

### SUMMARY

In view of this, the present disclosure provides a battery housing, a battery, and an electric device. The battery housing includes a housing body and a cover plate. The housing body and the cover plate are fixedly connected by using a weld portion. The weld portion includes a first weld portion. The first weld portion is simultaneously connected to at least a plurality of surfaces of the cover plate and an outer surface of a sidewall of the housing body. In this way, weld strength between the housing body and the cover plate is improved, and a risk of separation between the housing body and the cover plate during use of the battery can be reduced, thereby effectively preventing the occurrence of safety accidents such as battery leakage, and improving the safety of the battery.

According to a first aspect of the present disclosure, a battery housing is provided. The battery housing includes a cover plate and a housing body. The housing body has an opening portion in a first direction. The cover plate is suitable for being connected to the housing body by use of a weld portion, and covers the opening portion to form an accommodating space. The cover plate has a first surface and a second surface that are disposed opposite to each other. The first surface is a side surface of the cover plate that faces away from the accommodating space. The second surface is a side surface of the cover plate that faces the accommodating space. The first direction is perpendicular to the first surface and the second surface. A sidewall of the housing body has a third surface and a fourth surface that are disposed opposite to each other. The third surface is a side surface of the housing body that faces away from the accommodating space. The fourth space is a side surface of the housing body that faces the accommodating space. The weld portion includes a first weld portion. On a cross section of the battery housing in the first direction, an intersection point between the first weld portion and the first surface is a point A. An intersection point between the first weld portion and the third surface is a point B. An included angle between an extension line of a contour line of the third surface on the cross section that is in the first direction and a connection line between the point A and the point B is α, 0<α<90°, and the extension line extends in the first direction from the point B toward a plane in which the second surface is located.

It will be understood that the cover plate has a specific thickness. Therefore, a sidewall connecting the first surface to the second surface further exists between the first surface and the second surface of the cover plate. In the battery housing, the included angle α between a connection line AB and the extension line of an outer contour line of the housing body meets 0<α<90°. Therefore, the first weld portion is simultaneously connected to at least the cover plate and the third surface of the housing body (an outer surface of the sidewall of the housing body), to improve weld strength between the housing body and the cover plate, and reduce risk of separation between the housing body and the cover plate during use of a battery, thereby effectively preventing occurrence of safety accidents such as battery leakage, and improving the safety of the battery.

Optionally, 30°≤α≤60°.

Optionally, a distance between the point B and a plane in which the first surface of the cover plate is located is W₁, a distance between the point A and the second surface of the cover plate is W₂, a distance between the point B and the fourth surface is W₃, the first weld portion meets 0.2W₃≤(W₁-W₂)×tanα≤W₃, and W₁, W₂, W₃ are calculated in the same unit.

Optionally, the cover plate includes two cover plates, a distance between the point B and the first surface of a cover plate close thereto is W₁, and a distance between the point A and the second surface of the close cover plate is W₂.

Further, an outer edge of the first weld portion does not extend beyond the second surface and the fourth surface in a direction toward the accommodating space.

Optionally, an orthographic projection of the point A on the second surface is a point A', and the point A' is located in an orthographic projection of the housing body on the cover plate or a boundary thereof.

Optionally, in a second direction and a third direction, an orthographic projection of the cover plate does not overlap with an orthographic projection of the housing body, and any two of the first direction, the second direction, and the third direction are perpendicular to each other.

Optionally, there is a gap between the housing body and the cover plate in the first direction, a width of the gap is L₁, and 0<L₁≤0.05 mm.

Optionally, the first weld portion protrudes relative to the first surface and/or the third surface, a maximum protrusion size of the first weld portion relative to the first surface is L₂ and 0<L₂≤0.05 mm, and a maximum protrusion size of the first weld portion relative to the third surface is L₃ and 0<L₃≤0.05 mm.

Optionally, the distance between the point A and the second surface is W₂, the distance between the point B and the fourth surface is W₃, and 0.05 mm≤W₂≤W₃. Further, when W₂<W₃, 30°≤α≤45°.

Optionally, the opening portion includes two opposite opening portions, and the cover plate includes two opposite cover plates.

According to a second aspect of the present disclosure, a battery is provided, including an electrode core and the battery housing provided in the first aspect of the present disclosure, where the electrode core is accommodated in the accommodating space of the battery housing. Because the battery housing provided in the present disclosure is used for the battery, the battery is not prone to safety accidents such as battery leakage, and the safety of the battery is high.

According to a third aspect of the present disclosure, an electric device is provided, including the battery provided in the second aspect of the present disclosure. Because the foregoing battery is used to supply power to the device, the electric device has good market competitiveness.

### BRIEF DESCRIPTION OF DRAWINGS

FIG. 1A is an exploded view of a structure of a battery according to the present disclosure;
FIG. 1B is a top view of the battery in FIG. 1A;
FIG. 1C is a cross-sectional view taken along a line D-D in FIG. 1B;
FIG. 2 is a partially enlarged schematic diagram of a part b in FIG. 1C;
FIG. 3A is a partially enlarged schematic diagram of a part a in FIG. 1C;
FIG. 3B is another partially enlarged schematic diagram of a part a in FIG. 1C, and a size mark is different from that in FIG. 3A;
FIG. 4 is a partially enlarged schematic diagram of a part a of a battery in Comparative Example 1; and
FIG. 5 is an exploded view of another structure of a battery housing according to the present disclosure.

Description of reference numerals: 100-battery; 10-battery housing; 11-cover plate; 111-first surface; 112-second surface; 12-housing body; 123-third surface; 124-fourth surface; 13-first weld portion; 20-electrode core; 40-seal assembly; 41-seal cover; 42-seal plug; 50-terminal post assembly; 51-first tab; 52-second tab; and 60-explosion-proof mark.

### DESCRIPTION OF EMBODIMENTS

Generally, a battery includes a battery housing and an electrode core accommodated in the battery housing. A square battery is used as an example. The battery housing includes a housing body and a cover plate. In some cases, the battery housing includes a housing body, an upper cover, and a lower cover. The housing body is further assembled with a terminal post assembly, a seal assembly, and the like. The seal assembly is configured to seal a liquid injection hole disposed on the housing body, and the liquid injection hole is configured to inject an electrolyte into the battery. Generally, the cover plate is fixedly connected to the housing body by using a welding process, and laser welding is mostly used. However, in a current welding manner used by a battery manufacturer, the laser is generally irradiated perpendicular to an upper surface of an original cover plate, so that some regions of the cover plate and the housing body are fused to form the weld portion penetrating through the cover plate and extending into the housing body. The weld portion is connected to only the cover plate and an upper surface of a sidewall of the housing body. Robustness of batteries welded in this manner is not good enough, and the safety of the batteries cannot be ensured in a subsequent use process. In particular, after the battery falls off or encounters collision, the weld portion of the battery is prone to failure, resulting in adverse consequences such as leakage (electrolyte leakage) of the battery, and causing safety accidents.

Therefore, how to improve connection robustness between the cover plate and the housing body is a problem to be resolved urgently in the battery field.

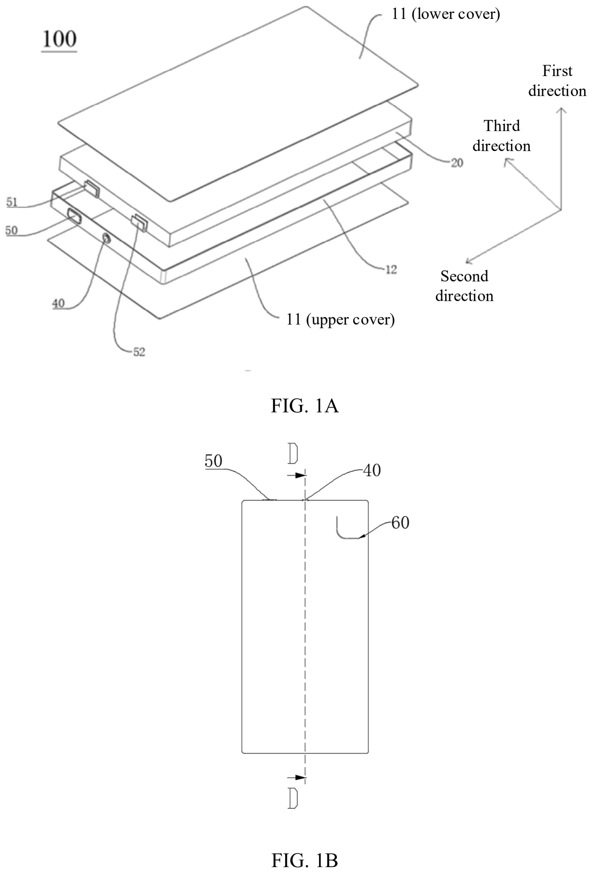

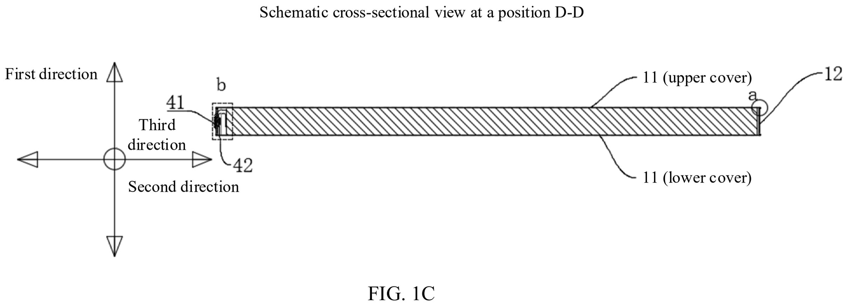

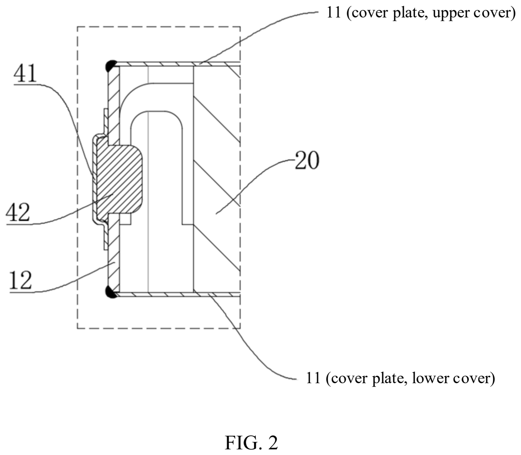

To resolve the foregoing problems, an embodiment of the present disclosure provides a battery housing 10. Referring to FIG. 1A to FIG. 3B, the battery housing 10 includes a cover plate 11 and a housing body 12. The housing body 12 has an opening portion in a first direction. The cover plate 11 is suitable for being connected to the housing body 12 by using a weld portion, and covers the opening portion of the housing body 12 to form an accommodating space. Specifically, in an implementation, the battery housing 10 includes a cover plate 11 and a housing body 12. In this case, in the first direction, one end of the housing body 12 has an opening portion, and the other end is a sealed integral structure. In another implementation, the battery housing 10 includes an upper cover, a housing body 12, and a lower cover. In this case, in the first direction, two opposite ends of the housing body 12 each have an opening portion, and the two opening portions each are welded to a cover plate 11 to implement sealing of the accommodating space. It should be noted that when the housing body 12 has two opening portions that are disposed opposite to each other in the first direction, a sidewall of the housing body 12 is the housing body 12.

The cover plate 11 has a first surface 111 and a second surface 112 that are disposed opposite to each other, and the first surface 111 is a side surface of the cover plate 11 that faces away from the accommodating space. It will be understood that the cover plate 11 has a specific thickness. Therefore, the cover plate 11 has the first surface 111, the second surface 112, and a sidewall located between the first surface 111 and the second surface 112 that connects the first surface 111 to the second surface 112. The first surface 111 is a surface of the cover plate 11 that faces away from the accommodating space (an upper surface of the cover plate 11), and the second surface 112 is a surface of the cover plate 11 that faces the accommodating space (a lower surface of the cover plate 11). The sidewall of the housing body 12 has a third surface 123 and a fourth surface 124 (that is, the third surface 123 and the fourth surface 124 of the housing body 12) that are disposed opposite to each other, and the third surface 123 is a side surface of the sidewall of the housing body 12 that faces away from the accommodating space. In the present disclosure, a shape of the battery housing 10 is not limited. In an application, to adapt to different shapes of the battery 100, the battery housing 10 may also have different shapes, for example, a square shape, a cylindrical shape, or another suitable shape, provided that a shape of the cover plate 11 is adapted to a shape of the opening portion of the housing body 12. Regardless of the foregoing cases, the third surface 123 refers to an outer surface of the housing body 12, and the fourth surface 124 refers to an inner surface of the housing body 12. The following uses a square battery housing 10 as an example.

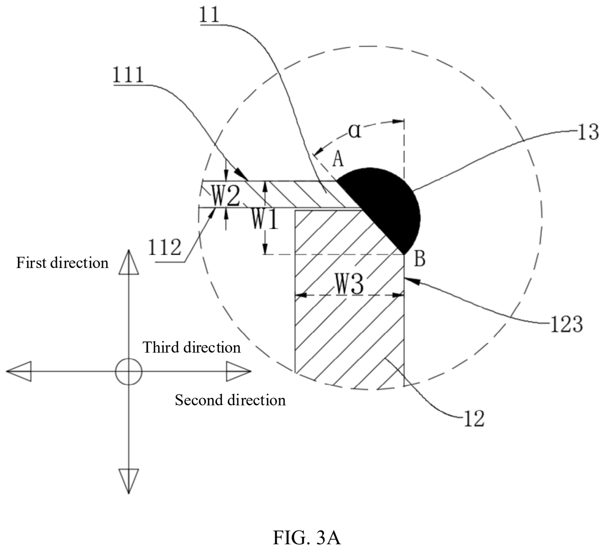

The weld portion includes a first weld portion 13. Referring to FIG. 3A, a second direction and a third direction are defined, both the second direction and the third direction are perpendicular to the first direction, and the second direction and the third direction are perpendicular to each other.

On a cross section of the battery housing in the first direction, an intersection point between the first weld portion 13 and the first surface 111 is a point A, and an intersection point between the first weld portion 13 and the third surface 123 is a point B. In some implementations, the battery housing 10 is a square battery housing. It will be understood that the first direction is determined as an extension direction (a thickness direction) of the battery housing 10, the second direction is parallel to a length direction of the battery housing 10, and the third direction is parallel to a width direction of the battery housing 10. Alternatively, the second direction is parallel to a width direction of the battery housing 10, and the third direction is parallel to a length direction of the battery housing 10. In some other implementations, the battery housing 10 is in a cylindrical shape, the first direction is an extension direction (a thickness direction) of the battery housing 10, and the second direction and the third direction are respectively parallel to two mutually perpendicular diameters of a circular cover plate of the battery housing 10. The battery housing 10 in another shape is adapted according to the foregoing principle, and details are not described herein again. On the cross section, the third surface 123 has a contour line (that is, an outer contour line of the sidewall of the housing body 12 on the cross section) on the cross section, a connection line between the point A and the point B is a connection line AB, an included angle between an extension line of the contour line and the connection line AB is α, and 0<α<90°. The extension line means that the contour line extends in the first direction from the point B toward a plane in which the second surface 112 is located. In the present disclosure, the extension line may be a ray with the point B being an endpoint, and the included angle is an angle between the line segment AB and the ray. In other words, as shown in FIG. 3A, an action region of the first welding portion 13 includes the upper surface (the first surface 111) of the cover plate 11, the sidewall of the cover plate 11, and the outer surface (the third surface 123) of the sidewall of the housing body 12, and may also act on the second surface 112 of the cover plate 11 and the upper surface of the sidewall of the housing body 12, to improve weld strength between the housing body 12 and the cover plate 11, reduce a risk of separation between the housing body 12 and the cover plate 11 during use of the battery 100, thereby effectively reducing occurrence of safety accidents such as the leakage of the battery 100, and improving the safety of the battery 100.

In addition, the first weld portion 13 improves weld strength between the housing body 12 and the cover plate 11, and helps improve sealing performance of the battery 100.

In the present disclosure, for fixed connection regions between the cover plate 11 and the housing body 12, all the fixed connection regions between the cover plate 11 and the housing body 12 may be connected by using the first weld portion 13, or some connection regions between the cover plate 11 and the housing body 12 may be connected by using the first weld portion 13, and in the remaining fixed connection regions, the cover plate 11 and the housing body 12 are connected in an existing welding manner (for ease of description, a weld portion formed in the existing welding manner is referred to as a second weld portion, which is not shown in the figure, that is, in some implementations, the welding portion includes a first weld portion 13 and a second weld portion). In some implementations of the present disclosure, the battery housing 10 is in a square shape, that is, an outer contour of the cover plate 11 and a contour shape of the opening portion of the housing body 12 are both rectangular, and at least four corners of each of the cover plate 11 and the housing body 12 each have a first weld portion 13. In some implementations of the present disclosure, the battery housing 10 is in a cylindrical shape, that is, an outer contour of the cover plate 11 and a contour shape of the opening portion of the housing body 12 are circular, oval, or nearly circular, and at least round corners of the cover plate 11 and the housing body 12 each have a first weld portion 13. In some implementations of the present disclosure, the housing body 12 and the cover plate 11 are completely fixedly connected by using the first weld portion 13. That is, the first weld portion 13 exists in each contact region between the housing body 12 and the cover plate 11. In this way, the robustness and sealing performance of the battery housing 10 are further improved, and the safety of the battery 100 is further ensured.

In the present disclosure, α may be 1°, 2°, 5°, 8°, 10°, 15°, 20°, 25°, 30°, 35°, 40°, 42°, 45°, 48°, 50°, 52°, 55°, 58°, 60°, 62°, 65°, 68°, 70°, 75°, 80°, 85°, 88°, 89°, or the like.

In the present disclosure, a relationship between the point A and the point B refers to a relationship between the point B and the point A on a corresponding cover plate 11. Specifically, when the battery housing 10 has both the upper cover and the lower cover, when the relationship between the point A and the point B is discussed, the point A is a point A of the upper cover, and the point B is an intersection point between the third surface 123 and the first weld portion 13 connecting the upper cover to the housing body 12. The lower cover is analogously understood, and details are not described herein again. In addition, the square battery housing 10 is used as an example. The third surface 123 and the fourth surface 124 of the sidewall of the housing body 12 each include four circumferentially disposed side surfaces. In the present disclosure, when a relationship between the point A, the point B, the third surface 123, and the fourth surface 124 is discussed, the third surface 123 and the fourth surface 124 respectively refer to two side surfaces corresponding to the point B. Specifically, when the relationship between the point A and the point B is discussed, the "third surface 123" refers to a side surface M on which the point B corresponding to the point A is located, and the "fourth surface 124" refers to a side surface N disposed opposite to the side surface M. The battery housing 10 of another shape is analogously understood according to the foregoing principle, and details are not described herein again.

In the present disclosure, a shape of the first weld portion 13 may be arbitrary. It will be understood that, on the cross section, a cross-sectional shape of the first weld portion 13 may also be arbitrary, for example, an arc shape or an irregular shape. In the present disclosure, a relationship between the connection line AB and the contour line of the third surface 123 on the cross section is limited. However, a relationship between the contour line of the third surface 123 on the cross section and a contour line of a cross section of the first weld portion 13 that faces the connection line AB is not limited. On the cross section, the contour line of the cross section of the first weld portion 13 that faces the connection line AB may be irregular, may be a straight line, a curved line, a wavy line, or the like, and may protrude toward the accommodating space relative to the connection line AB, may be recessed relative to the connection line AB, or may overlap or partially overlap with the connection line AB.

In some implementations of the present disclosure, there is a gap between the housing body 12 and the cover plate 11 in the first direction, a width of the gap is L₁, and 0<L₁≤0.05 mm. Generally, the gap exists between the housing body 12 and the cover plate 11 due to manufacturing precision and the like. Li is controlled to fall within the foregoing range, to facilitate welding between the housing body 12 and the cover plate 11, and preventing an electrode core 20 from being damaged in a welding process. It should be noted that the accommodating space in the present disclosure refers to a space used to accommodate the electrode core 20, and the accommodating space does not include the gap between the housing body 12 and the cover plate 11.

In some implementations of the present disclosure, 30°≤α≤60°. For example, α may be 30°, 32°, 35°, 38°, 40°, 42°, 45°, 48°, 50°, 52°, 55°, 58°, or 60°. A distance between the point A and a plane in which the third surface 123, on which a corresponding point B is located, is located is H₁ (that is, a distance between the point A and the extension line of the contour line of the third surface 123 on the cross section that is in the first direction, where the extension line extends in the first direction from the point B toward the plane in which the second surface 112 is located), and a distance between the point B and a plane in which a corresponding first surface 111 is located is W₁. It will be understood that values of H₁ and W₁ are appropriate if α is controlled to fall within the foregoing range. In other words, the first welding portion 13 is formed by welding the cover plate 11 and the housing body 12. In this case, if α falls within the foregoing range, an area of the action region of the first weld portion 13 on the cover plate 11 and the housing body 12 is appropriate, thereby further improving robustness between the cover plate 11 and the housing body 12 after welding, and improving the safety of the battery 100.

Referring to FIG. 3A, in some implementations of the present disclosure, a distance between the point B and a plane in which a corresponding first surface 111 of the cover plate 11 is located is W₁, a distance between the point A and the second surface 112 is W₂, a distance between the point B and the fourth surface 124 is W₃, the first weld portion 13 meets 0.2W₃≤(W₁-W₂)×tanα≤W₃, and W₁, W₂, and W₃ are calculated in the same unit. (W₁-W₂)×tanα≥0.2W₃ indicates that a distance between an intersection point C between the first weld portion 13 and the second surface 112 of the cover plate 11 and a plane in which a corresponding third surface 123 is located is large. In other words, with reference to states of the cover plate 11 and the housing body 12 before welding, a welding size and a welding area between the cover plate 11 before welding and the upper surface (the upper surface is a surface of the sidewall of the housing body 12 that is close to the cover plate 11 before welding, and the upper surface is connected to the third surface 123 and the fourth surface 124 of the housing body 12) of the sidewall of the housing body 12 before welding are large. Therefore, connection robustness between the cover plate 11 and the housing body 12 is better after welding. (W₁-W₂)×tanα≤W₃ indicates that an orthographic projection of the point C on the housing body 12 falls within the sidewall of the housing body 12 or overlaps with the fourth surface 124. In this way, robustness between the cover plate 11 and the housing body 12 is not affected, the battery housing 10 is more easily manufactured, and the electrode core 20 is not damaged in the welding process.

Further, in some specific embodiments of the present disclosure, an outer edge of the first weld portion 13 does not extend beyond the second surface 112 and the fourth surface 124 in a direction toward the accommodating space. That is, the first weld portion 13 does not extend beyond the cover plate 11 and the housing body 12 in the direction toward the accommodating space. The accommodating space in the present disclosure does not include the gap between the cover plate 11 and the housing body 12. In this way, a volume of the accommodating space is not compressed by the protruding/redundant first welding portion 13, and therefore, a space of the electrode core 20 is not compressed. In addition, an inner surface of the battery housing 10 is a smooth surface, and no protruding substance threatens the safety of the electrode core 20. Moreover, in the welding process of the battery housing 10, no molten material/welding flux falls on the electrode core 20. In this way, the safety of the electrode core 20 is protected comprehensively.

In some implementations of the present disclosure, the distance between the point A and the second surface 112 is W₂, the distance between the point B and the fourth surface 124 is W₃, and 0.05 mm≤W₂≤W₃. W₂ and W₃ are controlled to fall within the foregoing range to ensure that both the cover plate 11 and the battery housing 10 have specific strength, thereby protecting the electrode core 20 in the accommodating space, enabling the cover plate 11 to be at a low bending risk during welding and in a subsequent assembly process, and facilitating assembly of the battery 100. In some specific implementations of the present disclosure, 0.05 mm≤W₂≤0.5 mm, and 0.05 mm≤W₃≤0.5 mm. For example, W₂ and W₃ may be separately 0.05 mm, 0.06 mm, 0.07 mm, 0.08 mm, 0.09 mm, 0.1 mm, 0.15 mm, 0.2 mm, 0.25 mm, 0.3 mm, 0.35 mm, 0.4 mm, 0.45 mm, or 0.48 mm. In some specific embodiments of the present disclosure, 0.05 mm≤W₂<W₃≤0.5 mm. In this way, on the premise that a size of the battery 100 is fixed, structural strength of the battery housing 10 can be ensured and a space occupied by the cover plate is reduced, so that the battery housing 10 can provide a larger accommodating space to accommodate a larger electrode core, thereby further improving the energy density of the battery 100.

In some implementations of the present disclosure, when W₂<W₃, 30°≤α≤45°. For example, in this case, α may be 30°, 31°, 32°, 33°, 34°, 35°, 36°, 37°, 38°, 39°, 40°, 41°, 42°, 43°, 44°, or 45°. In this way, H₁≤W₁ and a difference between H₁ and W₁ is small, that is, an acting force of the first weld portion 13 on the cover plate 11 and the housing body 12 is balanced or biased toward the housing body 12. When the battery 100 is impacted by an external force from any direction, stress transferred by the first weld portion 13 to the cover plate 11 and the housing body 12 is comparable, or is more transmitted to the housing body 12, to fully exert a binding force of the housing body 12 to the first weld portion 13, and further reduce a risk of a crack or even separation between the first weld portion 13 and both of the cover plate 11 and the housing body 12. In addition, in the welding process of the battery housing 10, α is controlled to fall within the foregoing range, so that the cover plate 11 is less affected by welding heat, thereby fully reducing a risk of deformation of the cover plate 11, and more easily obtaining the battery housing 10 with better comprehensive performance and a higher yield.

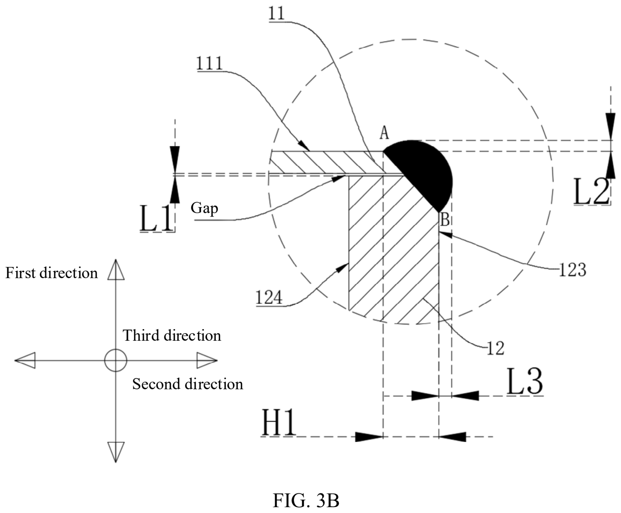

In some implementations of the present disclosure, an orthographic projection of the point A on the second surface is a point A', and the point A' is located in an orthographic projection of the housing body 12 on the cover plate 11 or a boundary thereof. Referring to FIG. 3B, it will be understood that the point A does not extend beyond a plane in which the fourth surface 124 is located, or a distance between the point A and a plane in which the third surface 123, in which a corresponding point B is located, is located is H₁, and H₁≤W₃. In this way, a defect such as an air hole does not appear on the cover plate 11, which ensures sealing performance of the battery 100 and robustness of the cover plate 11. In addition, in a preparation process, the cover plate 11 is not welded through, and no molten material falls from the cover plate 11 to the electrode core 20.

In some implementations of the present disclosure, an orthographic projection of the cover plate 11 does not overlap with an orthographic projection of the housing body 12 in the second direction, and the orthographic projection of the cover plate 11 does not overlap with the orthographic projection of the housing body 12 either in the third direction. It will be understood that, to implement the foregoing structure, in the second direction and the third direction, an outer edge of the sidewall of the cover plate 11 before welding overlaps with the third surface 123 of the housing body 12 before welding, or an outer edge of the sidewall of the cover plate 11 before welding extends beyond the third surface 123 of the housing body 12 before welding. In this way, it is more conducive to positioning between the cover plate 11 and the housing body 12, and the first weld portion 13 may be more fixedly connected to the cover plate 11 and the housing body 12.

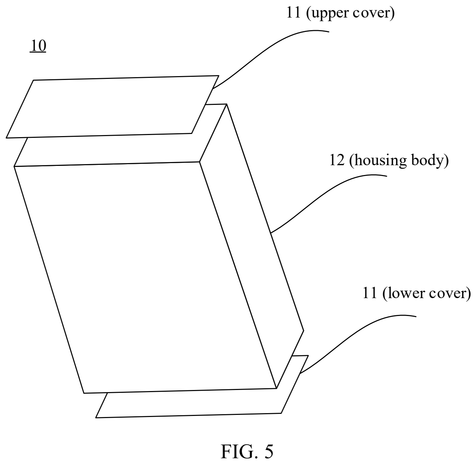

In some implementations of the present disclosure, two ends of the housing body 12 each have an opening portion in the first direction, and the battery housing 10 includes two cover plates 11. A surface (that is, the second surface 112) of the cover plate 11 that faces the accommodating space is a surface with the largest surface area in the battery housing 10 (the structure shown in FIG. 1A). The second surface 112 is the surface with the largest surface area in the battery housing 10, that is, the cover plate 11 occupies the largest area in the battery housing 10, and an area of the opening portion is large, which is more conducive to subsequent assembly of the electrode core 20, thereby improving production efficiency. In addition, because of a structural characteristic, the cover plate 11 may be thinner than the housing body 12. Therefore, the second surface 112 is not the surface with the largest surface area in the battery housing 10 (referring to a structure of the battery housing 10 shown in FIG. 5). In this case, when the second surface 112 is the largest surface, a total volume of the battery housing 10 may be smaller, and space utilization of the battery 100 may be improved. Moreover, in a current production process, the housing body 12 (in particular, the housing body 12 of the square battery housing) needs to be formed by bending and welding a plate material. In this way, reduction of a size of the housing body 12 may reduce a size of the plate material, thereby facilitating a bending process and facilitating preparation of the housing body 12.

In some implementations of the present disclosure, the first weld portion 13 protrudes relative to the first surface 111 and/or the third surface 123, a maximum protrusion size of the first weld portion 13 relative to the first surface 111 is L₂ and 0<L₂≤0.05 mm, and a maximum protrusion size of the first weld portion 13 relative to the third surface 123 is L₃ and 0<L₃≤0.05 mm. For example, L₂ and L₃ may be separately 0.01 mm, 0.02 mm, 0.03 mm, 0.04 mm, or 0.05 mm. L₂ and L₃ are controlled to fall within the foregoing range, to greatly save an outer space of the battery 100 that is occupied by the first weld portion 13, and facilitate assembly of the battery 100, thereby improving space utilization of the battery 100, and ensuring connection robustness between the housing body 12 and the cover plate 11.

In some implementations of the present disclosure, the outer edge of the first weld portion 13 is separately flush with the first surface 111 and the third surface 123.

In some implementations of the present disclosure, a material of the battery housing 10 is metal. In some specific embodiments, materials of the cover plate 11 and the housing body 12 separately include but are not limited to stainless steel, pure aluminum, or an aluminum alloy.

In some implementations of the present disclosure, an explosion-proof mark 60 is further disposed on the cover plate 11, and a thickness at the explosion-proof mark 60 is less than a thickness at another position on the cover plate 11. When a pressure inside the battery 100 is excessively large, because the thickness at the explosion-proof mark 60 is less than the thickness at another position on the cover plate 11, the explosion-proof mark 60 may be broken, and gas inside the battery 100 is discharged, to relief the pressure. In this way, the battery 100 can be prevented from explosion, and the safety of the battery 100 is improved. In the present disclosure, when the battery housing 10 has both the upper cover and the lower cover, the explosion-proof mark 60 may be disposed on the upper cover or the lower cover, or the explosion-proof mark 60 may be disposed on both the upper cover and the lower cover.

In some implementations of the present disclosure, a terminal post assembly 50 is disposed on the housing body 12 (or the sidewall of the housing body 12). Specifically, a first through hole is disposed on the housing body 12 (or the sidewall of the housing body 12), the terminal post assembly 50 is disposed at the first through hole, and the terminal post assembly 50 is insulated from the housing body 12. The terminal post assembly 50 includes a terminal post, a first insulator, a second insulator, and a metal sheet, and a through hole is disposed on each of the first insulator, the second insulator, and the metal sheet. The through holes on the first insulator, the second insulator, and the metal sheet are concentrically disposed with the first through hole on the housing body 12. The terminal post may sequentially pass through the first insulator, the housing body 12, the second insulator, and the metal sheet from the outside to the inside, and another end of the terminal post may be riveted on the metal sheet through crimping, so that the terminal post is electrically connected to the metal sheet. The first insulator is sandwiched between the terminal post and the housing body 12, and the second insulator is sandwiched between the housing body 12 and the metal sheet. Such an arrangement can prevent the battery 100 from being short-circuited due to contact between the terminal post and the housing body 12. It should be noted that the terminal post assembly 50 may alternatively be disposed on the upper cover or the lower cover. This is not limited herein.

As shown in FIG. 1A to FIG. 1C, the battery 100 includes an electrode core 20. The electrode core 20 includes an electrode core body and a first tab 51 and a second tab 52 that extend from the electrode core body, where the first tab 51 and the second tab 52 are opposite in polarity. That is, the first tab 51 may have positive polarity and the second tab 52 may have negative polarity or the first tab 51 may have negative polarity and the second tab 52 may have positive polarity. The first tab 51 may be electrically connected to the terminal post assembly 50, and the second tab 52 may be electrically connected to the battery housing 10. The first tab 51 may be electrically connected to the metal sheet, that is, the first tab 51 is electrically connected to the terminal post by using the metal sheet, to lead out an electrode. Such a design may increase an area of a connectable region between the first tab 51 and the terminal post assembly 50, to facilitate electrical connection therebetween. Specifically, the first tab 51 and the terminal post assembly 50 may be electrically connected through welding, bonding, abutment, or the like.

It should be noted that the first tab 51 may be a tab group, that is, the first tab 51 may include at least two tabs. A plurality of tabs are stacked and bundled together to obtain the first tab 51 or a plurality of tabs are bundled together and welded to a transition sheet to obtain the first tab 51. The second tab 52 may also be a tab group, that is, the second tab 52 may include at least two tabs. A plurality of tabs are stacked and bundled together to obtain the second tab 52 or a plurality of tabs are bundled together and welded to a transition sheet to obtain the second tab 52. In this way, a rate capability of the battery 100 can be improved.

It should be noted that both sides of the first tab 51 may further be adhered with insulation adhesive paper. In the first direction of the battery 100, the insulation adhesive paper may be adhered to upper and lower sides of the first tab 51. In this way, the battery 100 can be prevented from being short-circuited due to contact between the first tab 51 and the battery housing 10.

A liquid injection hole is further disposed on the housing body 12 to inject the electrolyte into the battery 100. After liquid injection of the battery 100 is completed, the liquid injection hole may be sealed by using a seal assembly 40. The seal assembly 40 includes a seal plug 42 and a seal cover 41. After liquid injection is completed, the seal plug 42 is first plugged into the liquid injection hole, the seal cover 41 is pressed onto the seal plug 42, and the seal cover 41 is fastened to the housing body 12, to seal the liquid injection hole. The seal plug 42 and the liquid injection hole may be in interference fit. When the seal cover 41 is pressed onto the seal plug 42, the seal plug 42 is compressed. Such a design may enable the battery 100 to have better sealing performance. Specifically, the seal cover 41 and the housing body 12 may be fixedly connected through welding. It should be noted that the liquid injection hole may be disposed between the first tab 51 and the second tab 52. In this way, it is more conducive to injecting the electrolyte into the battery 100, thereby increasing an infiltration rate of the electrode core 20. It should be noted that the liquid injection hole may alternatively be disposed on the upper cover or the lower cover, or may be designed according to a specific requirement. This is not limited in the present disclosure.

An embodiment of the present disclosure further provides a battery 100, including an electrode core 20 and the battery housing 10 provided in the embodiments of the present disclosure. The electrode core 20 is accommodated in the accommodating space of the battery housing 10.

Because the battery housing 10 provided in the present disclosure is used for the battery 100, the battery 100 is not prone to safety accidents such as battery leakage, and the safety of the battery 100 is high.

An embodiment of the present disclosure further provides an electric device, including the battery 100 provided in the embodiments of the present disclosure. Because the foregoing battery 100 is used to supply power to the electric device, a risk of safety accidents such as battery leakage during use of the electric device is low, and safety is high. Therefore, the electric device has high market competitiveness.

In some implementations of the present disclosure, the electric device includes but is not limited to a power vehicle or a 3C-type electronic device.

The following further describes the technical solutions of the present disclosure in detail by using a plurality of embodiments.

### Embodiment 1

A square battery S1 is provided. The square battery S1 includes a square battery housing and an electrode core accommodated in the battery housing. In a first direction, the battery housing includes a cover plate and a housing body having an opening portion. The cover plate is connected to the housing body by using a first weld portion, and covers the opening portion to form an accommodating space. For the battery S1, on a cross section of the battery housing in the first direction (the first direction is denoted as an extension direction of the battery housing), an intersection point between the first welding portion and a first surface of the cover plate is a point A, and an intersection point between the first weld portion and a third surface of the housing body is a point B. An included angle between an extension line (the extension line extends in the first direction from the point B toward a plane in which a second surface is located) of a contour line of the third surface on the cross section that is in the first direction and a connection line between the point A and the point B is α, and α=5° In addition, an outer edge of the first weld portion almost overlaps with the connection line AB in a direction toward the accommodating space.

A distance W₁ between the point B and a plane in which the first surface of the cover plate is located is 0.15 mm, a distance W₂ between the point A and the second surface of the cover plate is 0.065 mm, and a distance W₃ between the point B and a fourth surface of the housing body is 0.22 mm. In addition, a thickness of the cover plate is 0.065 mm, and a thickness of a sidewall of the housing body is 0.22 mm.

### Embodiment 2

A difference from Embodiment 1 lies only in that α=15°.

### Embodiment 3

A difference from Embodiment 1 lies only in that α=25°.

### Embodiment 4

A difference from Embodiment 1 lies only in that α=35°.

### Embodiment 5

A difference from Embodiment 1 lies only in that α=45°.

### Embodiment 6

A difference from Embodiment 1 lies only in that α=55°.

### Embodiment 7

A difference from Embodiment 1 lies only in that α=65°.

### Embodiment 8

A difference from Embodiment 1 lies only in that α=75°.

### Embodiment 9

A difference from Embodiment 1 lies only in that α=85°.

### Embodiment 10

A difference from Embodiment 1 lies in that α=45° and W₁ is 0.09 mm.

### Embodiment 11

A difference from Embodiment 1 lies in that α=45° and W₁ is 0.25 mm.

### Embodiment 12

A difference from Embodiment 1 lies in that α=45°, W₁ is 0.15 mm, W₂ is 0.05 mm, and W₃ is 0.1 mm. In addition, the thickness of the cover plate is 0.05 mm, and the thickness of the sidewall of the housing body is 0.1 mm.

### Embodiment 13

A difference from Embodiment 1 lies in that α=45°, W₁ is 0.3 mm, W₂ is 0.15 mm, and W₃ is 0.5 mm. In addition, the thickness of the cover plate is 0.15 mm, and the thickness of the sidewall of the housing body is 0.5 mm.

### Embodiment 14

A difference from Embodiment 1 lies in that α=35°, W₁ is 0.15 mm, W₂ is 0.065 mm, and W₃ is 0.065 mm. In addition, the thickness of the cover plate is 0.065 mm, and the thickness of the sidewall of the housing body is 0.065 mm.

To highlight the beneficial effects of the present disclosure, the following Comparative Example is set.

### Comparative Example 1

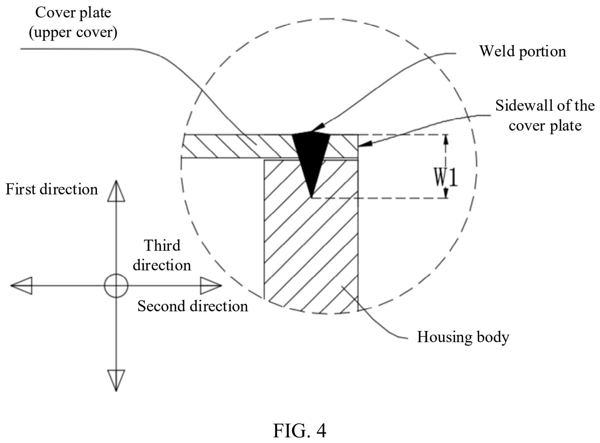

A housing body and a cover plate are provided, and thickness parameters of the housing body and the cover plate are the same as those in Embodiment 1. The cover plate and the housing body are connected by using a welding portion. For a cross section of a battery, referring to FIG. 4.

### Performance test:

Tensile test: A maximum tensile force that can be withstood at a welding position between the cover plate and the housing body is tested to determine welding robustness between the cover plate and the housing body. Specifically, a tensile testing machine with an appropriate measurement range is selected to test the battery housing.

First, the battery in each of the embodiments and the comparative example is disassembled, and the battery housing is cut into long strip-shaped test samples with the same size, where a width of the test sample is 0.5 cm, a length of the cover plate is 2.5 cm, and a length of the housing body is 0.4 cm. The test sample strip of the battery housing is fastened to a fixture of a tensile testing machine (YH-9002), and the fixture separately grips a housing body end and a cover plate end of the test sample strip. Specifically, one end of the fixture grips the housing body and the other end grips the cover plate. A tensile force is applied to the test sample, and the fixture moves with a movement speed of 200 mm/min, so that the weld position between the cover plate and the housing body breaks. A maximum tensile force value in the test process is recorded as a test result, to obtain the maximum tensile force that can be withstood by the weld position between the cover plate and the housing body. A larger value indicates better weld robustness between the cover plate and the housing body.

Five samples are prepared from a battery housing in the same embodiment/comparative example and an average value is calculated. Results are summarized in Table 1.

**Table 1**

| Experiment No. | α | W₁ (mm) | W₂ (mm) | W₃ (mm) | (Wi-W₂)tanα (mm) | W₁×tanα (H₁) (mm) | Tensile force (kgf) |
|---|---|---|---|---|---|---|---|
| Embodiment 1 | 5° | 0.15 | 0.065 | 0.22 | 0.0074 | 0.0131 | 5.02 |
| Embodiment 2 | 15° | 0.15 | 0.065 | 0.22 | 0.0228 | 0.0402 | 6.15 |
| Embodiment 3 | 25° | 0.15 | 0.065 | 0.22 | 0.0396 | 0.0699 | 7.12 |
| Embodiment 4 | 35° | 0.15 | 0.065 | 0.22 | 0.0595 | 0.1050 | 7.51 |
| Embodiment 5 | 45° | 0.15 | 0.065 | 0.22 | 0.0850 | 0.1500 | 8.26 |
| Embodiment 6 | 55° | 0.15 | 0.065 | 0.22 | 0.1214 | 0.2142 | 7.40 |
| Embodiment 7 | 65° | 0.15 | 0.065 | 0.22 | 0.1823 | 0.3217 | 6.87 |
| Embodiment 8 | 75° | 0.15 | 0.065 | 0.22 | 0.3172 | 0.5598 | 6.53 |
| Embodiment 9 | 85° | 0.15 | 0.065 | 0.22 | 0.9716 | 1.7145 | 6.03 |
| Embodiment 10 | 45° | 0.09 | 0.065 | 0.22 | 0.0250 | 0.0900 | 6.21 |
| Embodiment 11 | 45° | 0.25 | 0.065 | 0.22 | 0.1850 | 0.2500 | 6.98 |
| Embodiment 12 | 45° | 0.15 | 0.05 | 0.10 | 0.1000 | 0.1500 | 6.34 |
| Embodiment 13 | 45° | 0.30 | 0.15 | 0.50 | 0.1500 | 0.3000 | 9.68 |
| Embodiment 14 | 35° | 0.15 | 0.065 | 0.065 | 0.0595 | 0.1050 | 5.86 |
| Comparative Example 1 | / | 0.15 | 0.065 | 0.22 | / | / | 4.97 |

It will be understood from the results in Table 1 that the maximum tensile force values between the cover plates and the housing bodies of the battery housings in the embodiments of the present disclosure are obviously higher than that of the battery in the comparative example. It is fully demonstrated that the first weld portion can significantly improve connection robustness between the cover plate and the housing body.

It will be understood from comparison of the results of Embodiment 1 to Embodiment 9 that when α is controlled to fall within a range of 30° to 60°, robustness between the cover plate and the housing body is good. Further, when W₂<W₃ and α is controlled to fall within a range of 30° to 45° (Embodiment 4 and Embodiment 5), robustness between the cover plate and the housing body is better. It will be understood from comparison of data of Embodiment 5 and Embodiment 10 to Embodiment 12 that when α is same and when (W₁-W₂)×tanα and W₁×tanα (H₁) further meet conditions of the present disclosure, weld strength between the cover plate and the housing body is better.

In the description of the present disclosure, "a plurality of" means at least two, for example, two or three, unless otherwise clearly and specifically limited.

The foregoing descriptions are merely example implementations of the present disclosure. It should be noted that a person of ordinary skill in the art can further make several improvements and modifications to the present disclosure without departing from the principles of the present disclosure, and the improvements and modifications fall within the protection scope of the present disclosure.

## Claims

1. A battery housing (10), comprising:
a cover plate (11) and a housing body (12), wherein
the housing body (12) has an opening portion in a first direction, and the cover plate (11) is suitable for being connected to the housing body by using a weld portion, and covers the opening portion to form an accommodating space;
the cover plate (11) has a first surface (111) and a second surface (112) that are disposed opposite to each other, the first surface (111) is a side surface of the cover plate (11) that faces away from the accommodating space, the second surface (112) is a side surface of the cover plate (11) that faces the accommodating space, the first direction is perpendicular to the first surface (111) and the second surface (112), a sidewall of the housing body has a third surface (123) and a fourth surface (124) that are disposed opposite to each other, the third surface (123) is a side surface of the housing body that faces away from the accommodating space, and the fourth surface (124) is a side surface of the housing body that faces the accommodating space;
the weld portion comprises a first welding portion (13); and
on a cross section of the battery housing in the first direction, an intersection point between the first weld portion (13) and the first surface (111) is a point A, an intersection point between the first weld portion and the third surface (123) is a point B, an included angle between an extension line of a contour line of the third surface (123) on the cross section that is in the first direction and a connection line between the point A and the point B is α, 0<α<90°, and the extension line extends in the first direction from the point B toward a plane in which the second surface (112) is located.

2. The battery housing (10) according to claim 1, wherein 30°≤α≤60°.

3. The battery housing (10) according to any one of claims 1 and 2, wherein a distance between the point B and a plane in which the first surface (111) of the cover plate (11) is located is W₁, a distance between the point A and the second surface (112) of the cover plate (11) is W₂, a distance between the point B and the fourth surface (124) is W₃, the first weld portion (13) meets 0.2W₃≤(W₁-W₂)×tanα≤W₃, and W₁, W₂, W₃ are calculated in the same unit.

4. The battery housing (10) according to claim 3, wherein the cover plate (11) comprises two cover plates (11), a distance between the point B and the first surface (111) of a cover plate (11) close thereto is W₁, and a distance between the point A and the second surface (112) of the close cover plate (11) is W₂.

5. The battery housing (10) according to any one of claims 1 to 4, wherein an outer edge of the first weld portion (13) does not extend beyond the second surface (112) and the fourth surface (124) in a direction toward the accommodating space.

6. The battery housing (10) according to claim 1, wherein an orthographic projection of the point A on the second surface (112) is a point A', and the point A' is located in an orthographic projection of the housing body on the cover plate (11) or a boundary thereof.

7. The battery housing (10) according to any one of claims 1 to 5, wherein in a second direction and a third direction, an orthographic projection of the cover plate (11) does not overlap with an orthographic projection of the housing body, and any two of the first direction, the second direction, and the third direction are perpendicular to each other.

8. The battery housing (10) according to any one of claims 1 to 7, wherein there is a gap between the housing body and the cover plate (11) in the first direction, a width of the gap is L₁, and 0<L₁≤0.05 mm.

9. The battery housing (10) according to any one of claims 1 to 6, wherein the first welding portion (13) protrudes relative to the first surface (111) and/or the third surface (123), a maximum protrusion size of the first welding portion (13) relative to the first surface (111) is L₂ and 0<L₂≤0.05 mm, and a maximum protrusion size of the first welding portion (13) relative to the third surface (123) is L₃ and 0<L₃≤0.05 mm.

10. The battery housing (10) according to any one of claims 1 to 6, wherein the distance between the point A and the second surface (112) is W₂, the distance between the point B and the fourth surface (124) is W₃, and 0.05 mm≤W₂≤W₃.

11. The battery housing (10) according to claim 10, wherein when W₂<W₃, 30°≤α≤45°.

12. The battery housing (10) according to any one of claims 1 to 3 or 5 to 10, wherein the opening portion comprises two opposite opening portions, and the cover plate (11) comprises two opposite cover plates (11).

13. A battery (100), wherein the battery comprises an electrode core (20) and the battery housing (10) according to any one of claims 1 to 12, and the electrode core (20) is accommodated in the accommodating space of the battery housing (10).

14. An electric device, wherein the electric device comprises the battery (100) according to claim 13.
